Europäisches Patentamt

European Patent Office

Office européen des brevets

(19)

(11) Veröffentlichungsnummer: **0 266 367**
**B1**

(12) **EUROPÄISCHE PATENTSCHRIFT**

(45) Veröffentlichungstag der Patentschrift: **06.06.90**

(51) Int. Cl.⁵: **D 21 F 5/20, F 25 B 25/02**

(21) Anmeldenummer: **87902086.5**

(22) Anmeldetag: **02.04.87**

(86) Internationale Anmeldenummer:
**PCT/EP87/00179**

(87) Internationale Veröffentlichungsnummer:
**WO 87/06284 22.10.87 Gazette 87/23**

(54) ANLAGE ZUR RÜCKGEWINNUNG VON IN DER ABLUFT DER TROCKNER VON PAPIERMASCHINEN ENTHALTENER ABWÄRME.

(30) Priorität: **17.04.86 DE 3612907**

(43) Veröffentlichungstag der Anmeldung:
**11.05.88 Patentblatt 88/19**

(45) Bekanntmachung des Hinweises auf die
Patenterteilung:
**06.06.90 Patentblatt 90/23**

(84) Benannte Vertragsstaaten:
**AT BE CH FR GB IT LI NL SE**

(56) Entgegenhaltungen:
**EP-A-0 003 293**
**EP-A-0 053 536**
**WO-A-82/02939**
**FR-A-2 505 034**

(73) Patentinhaber: **TCH THERMO-CONSULTING-HEIDELBERG GMBH**
**Im Neuenheimer Feld 517**
**D-6900 Heidelberg 1 (DE)**

(72) Erfinder: **MUCIC, Vinko**
**Finkenweg 1 A**
**D-6906 Walldorf (DE)**

(74) Vertreter: **Helber, Friedrich G., Dipl.-Ing. et al**
**Giesser Weg 47**
**D-6144 Zwingenberg (DE)**

Courier Press, Leamington Spa, England.

**Beschreibung**

Die Erfindung betrifft eine Anlage zur Rückgewinnung von in der Abluft der Trockner von Papiermaschinen enthaltener Abwärme mittels einer niederdruckseitig mit der Abluft beaufschlagten Kompressions-Wärmepumpe, mit welcher hochdruckseitig aus Speisewasser-Prozeßdampf zur Beheizung der Trocknungszylinder erzeugt und außerdem anschließend zur Trocknung verwendete Luft vorgewärmt wird.

Bei der Papierherstellung in Papiermaschinen wird der ursprünglich relativ dünnflüssige Faserbrei zunächst zum Faservlies verdichtet und dann durch Vakuumsauger und durch Gautschwalzen und schließlich in der Pressenpartie durch eine Reihe von Naßpressen entwässert. Das restliche Wasser wird dann im Trocknungsteil der Papiermaschine entzogen, der von einer Reihe in einer Trocknungskammer angeordneten, mit Niederdruck-Dampf mit Temperaturen von etwa 140° bis 150°C beheizten Zylindern gebildet wird. Der Prozeßdampf für die Beheizung der Trocknungszylinder wird dabei bisher in der Praxis in mit fossilen Brennstoffen gefeuerten Niederdruck-Dampfkesseln erzeugt, sofern nicht ohnehin Dampf aus anderen Quellen, z.B. der Elektrizitätserzeugung, zur Verfügung steht. Die bei der Trocknung entstehende warme Abluft hoher relativer Feuchte wird dabei bisher in die Umgebungsatmosphäre abgegeben, was einerseits energetisch ungünstig ist und andererseits—insbesondere bei kalten Außentemperaturen—die Umwelt auch durch Schwaden- oder Nebelbildung belasten kann. Es besteht daher sowohl im Hinblick auf die Einsparung von Energie als auch die Verminderung von Umweltbelastungen ein Bedürfnis, die in der warmen und feuchten Abluft noch enthaltene Wärmeenergie möglichst weitgehend in den Prozeß der Papierherstellung zurückzuführen, und so die geschilderten Nachteile zu vermeiden. In besonderem Maße geeignet für die Verwendung von Abwärme auf relativ niedrigem Temperaturniveau sind an sich Wärmepumpen, und es sind auch bereits Vorschläge zur Übertragung der in der Abluft der Trocknungskammer enthaltenen Abwärme auf die der Trocknungskammer zum Zweck der Trocknung zuzuführende Blasluft mittels einer Kompressions-Wärmepumpe bekanntgeworden (DE—A—26 30 853). Auch für die Erzeugung von Prozeßdampf aus Speisewasser für die Beheizung der Trocknungszylinder und die Erwärmung der Blasluft wurde die Verwendung von Kompressions-Wärmepumpen bereits theoretisch beschrieben (Artikal: "Eine Betrachtung über die Einsatzmöglichkeiten von Wärmepumpen bei der Papiertrocknung" von J. Kappel, F. Schweinzer und A. Weinmann in "Wochenblatt für Papierfabrikation" 7, 1984, S. 133—238). Auch die WO 82/02939 zeigt eine Anlage, bei der die feuchte Abluft und das Kondenswasser aus dem Prozeßdampf zu einer Wärmepumpe geführt und der an der Resorberseite der Wärmepumpe erhaltene Dampf zum Trocknungsprozeß zurückgeführt wird. Dabei wurde aber lediglich der Einsatz von Einstoff-Kompressions-Wärmepumpen in Erwägung gezogen, welche zur Verwirklichung einer hinreichenden Temperaturerhöhung der bei relativ niedriger Temperatur anfallenden Abwärme zumindest dann von zwei in Reihe hintereinandergeschalteten Kompressions-Wärmepumpen gebildet werden mußten, wenn neben der Erwärmung der Blasluft auch Dampf zur Beheizung der Trocknungszylinder erzeugt werden soll. In den hintereinandergeschalteten Wärmepumpen muß dann mit für den jeweiligen Temperaturbereich geeigneten unterschiedlichen Arbeitsmedien gearbeitet werden, was zu einem komplexen System führt. In dem erwähnten Artikel wird dabei von den Autoren darauf hingewiesen, daß die Untersuchung über die verschiedenen in Frage kommenden Arbeitsmedien kein thermodynamisch optimales Medium gefunden hat. Im Ergebnis kommen die Autoren deshalb zum Schluß, daß die Verwendung geschlossener Kompressions-Wärmepumpen mit Elektromotor-Antrieb zwar grundsätzlich möglich, aber bei den derzeit gefahrenen Taupunkten des Trockners unwirtschaftlich sind.

Bei der Papierherstellung treten aber außerdem aufgrund bestimmter Betriebsbedingungen Probleme auf, welche den Einsatz von Wärmepumpen für die Erzeugung des zur Beheizung der Trocknungswalzen erforderlichen Prozeßdampfs erschweren. Durch produktionsbedingte Einflüsse kommt es häufig zu einem Papierriß in der Maschine, was zur Folge hat, daß die Papiermaschine kurzzeitig abgestellt werden muß, bis das Papier wieder in die Maschine eingeführt wird. In dieser Stillstandszeit erfolgt aber keine Papiertrocknung, so daß dem Verdampfer einer Einstoff-Wärmepumpe auch keine Abwärme durch Abluft zur Verfügung steht. Beim Wiederanfahren der Papiermaschine könnte die Wärmepumpe dann keinen Dampf liefern, so daß der Weiterbetrieb der Maschine also nur dann möglich ist, wenn zumindest für einen gewissen Übergangszeitraum Dampf für die Beheizung der Trocknungszylinder aus anderer Quelle zur Verfügung steht. Dieses Problem verschärft sich noch beim Wiederanfahren der Papiermaschine nach längerer Stillstandszeit, z.B. nach Überholungen oder Reparaturen. Die Investitionen für einen Niederdruck-Dampfkessel nur für das Anfahren der stillgesetzten Papiermaschine wären dann aber auch unter Berücksichtigung der mittels der Wärmepumpe erzielbaren Energieeinsparungen wirtschaftlich keinesfalls mehr darstellbar. Schließlich stellen dann auch noch die in der Abluft der Trocknungszone der Papiermaschine enthaltenen Papierfasern und andere Verunreinigungen ein Problem dar, da sie zwangsläufig zu Verschmutzungen der mit der Abluft zu beaufschlagenden Flächen des Verdampfers einer Wärmepumpe führen.

Der Erfindung liegt demgegenüber die Aufgabe zugrunde, .die in der im Trocknungsteil von Papiermaschinen entstehenden feuchten Abluft enthaltene Abwärme zur Erzeugung von Niederdruck-Prozeßdampf mittels einer Kompressions-Wärmepumpe in einer zu hoher Energieeinsparung führender Weise wirtschaftlich nutzen zu können. Dabei soll es grundsätzlich möglich sein, ohne zusätzliche externe Dampfquellen für die Beheizung der Trocknungszylinder beim Wiederanfahren der kurzzeitigstillgesetzten Papiermaschine auszukommen.

Ausgehend von einer Anlage der eingangs erwähnten Art wird diese Aufgabe erfindungsgemäß dadurch gelöst, daß die Wärmepumpe als Zweistoff-Kompressions-Wärmepumpe mit einem in die hochdruckseitigen Abschnitte der die reiche und die arme Lösung führenden Leitungen eingeschalteten Wärmewechsler ausgebildet ist, daß die mit der Abluft-Abwärme zu beaufschlagende Seite des Entgasers der Wärmepumpe in die die Feuchte Abluft vom Trockner abführende Leitung eingeschaltet und der Wasserdampf-Auslaß des Resorbers über eine Prozeßdampf-Leitung mit dem Prozeßdampf-Einlaß des Trockners der Papiermaschine verbunden ist, daß in den zwischen dem Wärmewechsler und dem Drosselorgan verlaufenden Abschnitt der die reiche Lösung vom Resorber zum Entgaser führenden Leitung wenigstens ein Wärmetauscher eingeschaltet ist, in welchem die reiche Lösung mittels der anschließend zur Trocknung verwendeten Luft abgekühlt wird, daß von dem zwischen dem Resorber und dem Temperaturwechsler liegenden Abschnitt der die reiche Lösung führenden Leitung eine Zweigleitung für reiche Lösung abgezweigt und in den zwischen dem Wärmewechsler und dem Drosselorgan verlaufenden Abschnitt der Leitung zurückgeführt ist, und daß in die Zweigleitung wenigstens ein weiterer Wärmetauscher eingeschaltet ist, welcher bezüglich der Durchströmung mittels anschließend zur Trocknung verwendeter Umgebungsluft dem wenigstens einen Wärmetauscher in Reihe nachgeschaltet ist. Durch die Verwendung einer Zweistoff-Wärmepumpe diesen Aufbaus wird sowohl die Leistungsziffer des Wärmepumpen-Prozesses als auch die Vorwärmung der für die anschließende Trocknung verwendeten Luft optimiert, d.h. die Investitionen für die Wärmepumpenanlage amortisieren sich vergleichsweise schnell.

Falls zur optimalen Kühlung der reichen Lösung eine die erforderliche Menge der Trocknungsluft übersteigende Luftmenge erforderlich wäre, empfiehlt es sich, eine Einrichtung zur Einspritzung von Wasser in den von der anschließend als Trocknungsluft verwendeten Umgebungsluft durchströmten Teil zumindest des ersten Wärmetauschers vorzusehen. Die erforderliche Abkühlung wird dann infolge der zur Verdampfung des eingespritzten Wassers erforderlichen Wärme auch mit verringerter Luft-Durchsatzmenge erreicht. Außerdem wird die Sättigungstemperatur der Abluft erhöht, so daß sekundärseitig mit höherer Temperatur entgast, d.h. bei vergleichsweise erhöhtem Druck entgast werden kann, wodurch die zum Antrieb des Kompressors der Wärmepumpe erforderliche Leistung verringert wird.

Eine weitere Verbesserung des Wärmepumpen-Prozesses im Hinblick auf die erforderliche Kompressor-Antriebsleistung mit der gleichzeitigen Möglichkeit für die Trocknung zu verwendende Umgebungsluft vorzuwärmen, wird mit einer Weiterbildung erreicht, bei welcher in die die im Entgaser ausgetriebene gasförmige Arbeitsmittelkomponente zum Resorber führende Leitung entweder ein wenigstens zweistufiger Kompressor oder wenigstens zwei einstufige Kompressoren in Reihe hintereinander eingeschaltet ist bzw. sind, wobei hinter der ersten und vor der letzten Stufe des mehrstufigen Kompressors bzw. hinter dem ersten und vor dem letzten Kompressor in die die gasförmige Arbeitsmittelkomponente führende Leitung wenigstens ein Wärmetauscher eingeschaltet ist, der zur Abkühlung der gasförmigen Arbeitsmittelkomponente mit anschließend zur Trocknung verwendeter Umgebungsluft durchströmbar ausgebildet ist.

Anstelle oder zusätzlich zu der Zwischenkühlung der gasförmigen Arbeitsmittelkomponente können in der arme Lösung vom Entgaser zum Resorber führenden Leitung zwei Lösungspumpen in Hintereinanderschaltung angeordnet sein, wobei in dem zwischen den Lösungspumpen liegenden Abschnitt der Leitung ein andererseits mit anschließend zur Trocknung verwendeter Umgebungsluft als Kühlmittel durchströmter Wärmetauscher eingeschaltet ist, in dessen von der armen Lösung durchströmten Teil zusätzlich das eine Ende einer Zweigleitung mündet, deren anderes Ende zwischen den Stufen des mehrstufigen Kompressors bzw. zwischen den Kompressoren an der gasförmige Arbeitsmittelkomponente führenden Leitung angeschlossen ist. Somit kann gasförmige Arbeitsmittelkomponente in den von der armen Lösung durchströmten Teil des Wärmetauschers übertreten und unter Abgabe von Resorptionswärme bei einem unter dem Druck des Hauptresorbers der Wärmepumpe liegenden Druck in der armen Lösung resorbiert werden.

Das Problem der Zurverfügungstellung von Prozeßdampf unmittelbar beim Wiederanfahren einer infolge Papierrisses vorübergehend kurzzeitig stillgesetzten Papiermaschine wird in erfindungsgemäßer Weiterbildung dadurch gelöst, daß an der Prozeßdampf-leitung eine zur abluftbeaufschlagten Seite des Entgasers geführte Zweigleitung angeschlossen ist und in der Zweigleitung Steuereinrichtungen zur Umschaltung des bei kurzzeitigem Stillstand der Papiermaschine in die Prozeßdampf-Leitung eingespeisten Wasserdampfs in die Zweigleitung vorgesehen sind. Bei kurzzeitigem Abstellen der Papiermaschine aufgrund von Papierriß kann die Wärmepumpe also weiterbetrieben werden, wobei der im Resorber aus dem Speisewasser erzeugte Prozeßdampf dann nicht zur Beheizung der Trocknungszylinder, sondern zur Entgasung des Zweistoff-Arbeitsmittels verwendet wird. Beim Wiederanfahren der Maschine steht also sofort Prozeßdampf zur Beheizung der Trocknungszylinder zur Verfügung.

Die Steuereinrichtungen können dann in vorteilhafter Weiterbildung der Erfindung von einem in der Zweigleitung eingeschalteten und durch den beim Schließen der Dampfzufuhr zur Papiermaschine in der Prozeßdampfleitung steigenden Dampfdruck geschaltetes Überströmventil gebildet werden.

Um die sichere Reinigung der mit der Abluft bzw. dem Wasserdampf zu beaufschlagenden Flächen des Entgasers sicherzustellen, ist die Ausgestaltung vorzugsweise so getroffen, daß innerhalb des Mantelraums des Entgasers der Wärmepumpe den zu reinigenden Flächen eine Vielzahl von im wesentlichen gleichmäßig verteilten, an die Zweigleitung angeschlossenen Dampfaustrittsdüsen in geringem Abstand gegenübergestellt sind, welche den beim kurzzeitigen Stillstand der Papiermaschine infolge Papierrisses durch den Entgaser geführten Wasserdampf in einer Vielzahl von Reinigungsstrahlen auf die zu reinigenden Flächen gerichtet aufblasen und diese Flächen dadurch von etwa anhaftenden und den Wärmeübergang verschlechternden Verunreinigungen freiblasen.

Das Anfahren der erfindungsgemäßen Anlage nach einem längerdauernden Stillstand der Papiermaschine, bei welcher die Wärmepumpe stillgesetzt wurde, wird durch eine Ausgestaltung .ermöglicht, bei welcher ein mit Erdgas, leichtem Heizöl oder einem anderen fossilen Brennstoff beheiztes Erhitzeraggregat für dem Entgaser zuzuführende Umgebungsatmosphäre vorgesehen ist, mit welcher dann beim Anfahren der Papiermaschine solange Zweistoff-Arbeitsmittel entgast wird, bis aus der wieder in Betrieb genommenen Papiermaschine Abwärme zur Verfügung steht.

Die Erfindung ist in der folgenden Beschreibung von Ausführungsbeispielen in Verbindung mit der Zeichnung näher erläutert, und zwar zeigt:

Fig. 1 einen schematisierten Schaltplan einer die in der aus der Trocknungszone einer Papiermaschine austretenden feuchten Abluft enthaltene Abwärme zur Dampferzeugung mittels einer Zweistoff-Kompressions-Wärmepumpe nutzenden Anlage, wobei die Mittel zur zusätzlichen Vorwärmung der Trocknungsluft der besseren Übersichtlichkeit halber noch weggelassen sind;

Fig. 2 eine der Figur 1 entsprechende Darstellung der Anlage während des Anfahrens nach längerem Stillstand;

Fig. 3 eine Schnittansicht durch einen Teilabschnitt des Entgasers der in der Anlage verwendeten Zweistoff-Kompressions-Wärmepumpe;

Fig. 4 eine Schnittansicht durch den Entgaser-Teilabschnitt, gesehen in Richtung der Pfeile 4—4 in Figur 3;

Fig. 5 ein schematisierter Schaltplan eines Ausführungsbeispiels der in der erfindungsgemäßen Weise ausgebildeten Zweistoff-Kompressions-Wärmepumpe mit Lösungskreislauf, wobei Möglichkeiten zur Kühlung der reichen Lösung durch Wärmetauscher unter gleichzeitiger Vorwärmung von anschließend zur Trocknung verwendeter Umgebungsluft veranschaulicht sind;

Fig. 6 den in Figur 5 innerhalb des strichpunktierten Bereichs 6 liegenden Teilabschnitt des Schaltplans der Zweistoff-Kompressions-Wärmepumpe unter zusätzlicher schematischer Veranschaulichung der Möglichkeit der Einspritzung von Wasser in den von der vorzuwärmenden Umgebungsluft durchströmten Teil eines der zur Abkühlung der reichen Lösung vorgesehenen Wärmetauschers; und

Fig. 7 einen schematischen Schaltplan einer gegenüber der in Figur 5 gezeigten Wärmepumpe weiter verbesserten Zweistoff-Kompressions-Wärmepumpe.

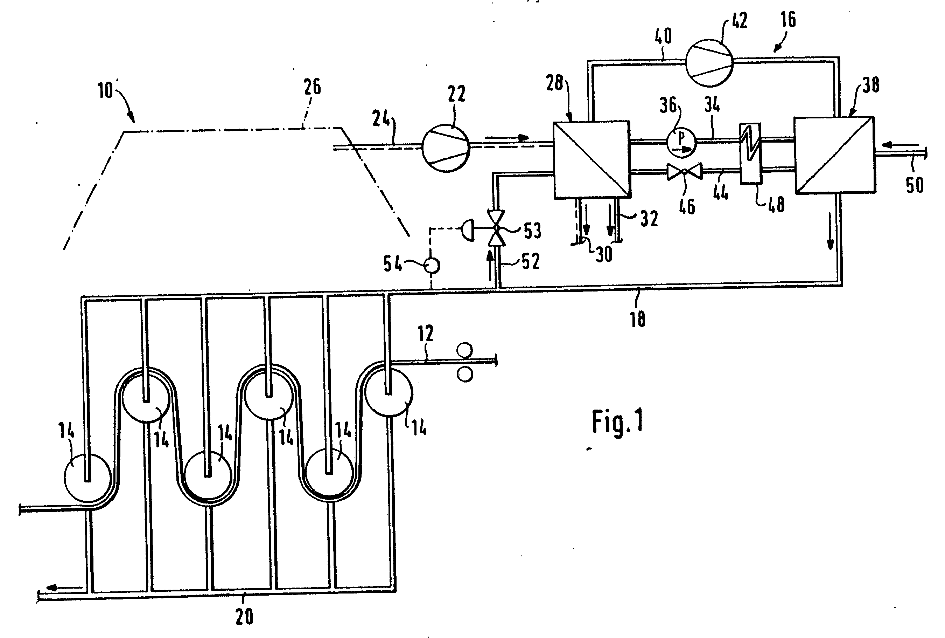

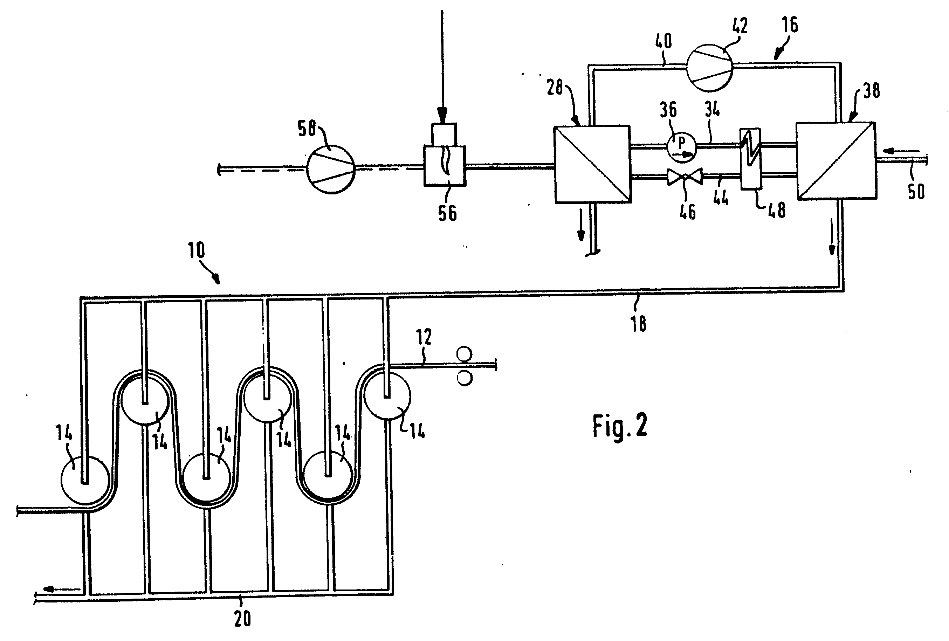

In den Figuren 1 und 2 ist von der Papiermaschine nur schematisch der als geschlossene Kammer ausgebildete Trocknungsbereich 10 angedeutet, in welchem die vorentwässerte Papierbahn 12 über eine Anzahl von beheizten Zylindern 14 geführt und getrocknet wird. Der zur Beheizung der Zylinder 14 dienende Niederdruck-Prozeßdampf wird in einer in ihrer Gesamtheit mit 16 bezeichneten, der besseren Übersichtlichkeit halber zunächst noch in einer vereinfachten dargestellten Zweistoff-Kompressions-Wärmepumpe erzeugt und über eine Prozeßdampf-Leitung 18 den Zylindern 14 zugeführt. Über eine an die Zylinder angeschlossene gemeinsame Kondensat-Abführleitung 20 wird das in den Zylindern entstehende Kondensat abgeführt.

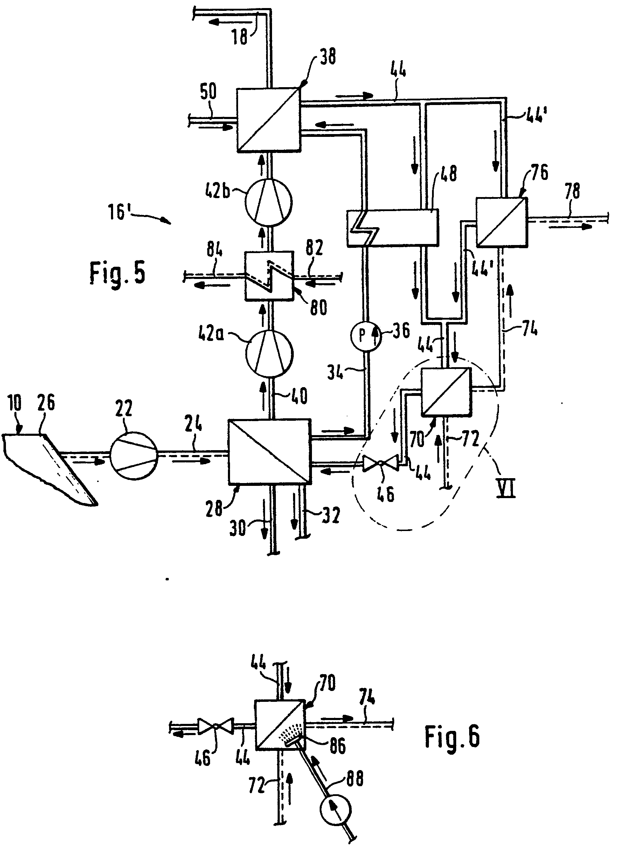

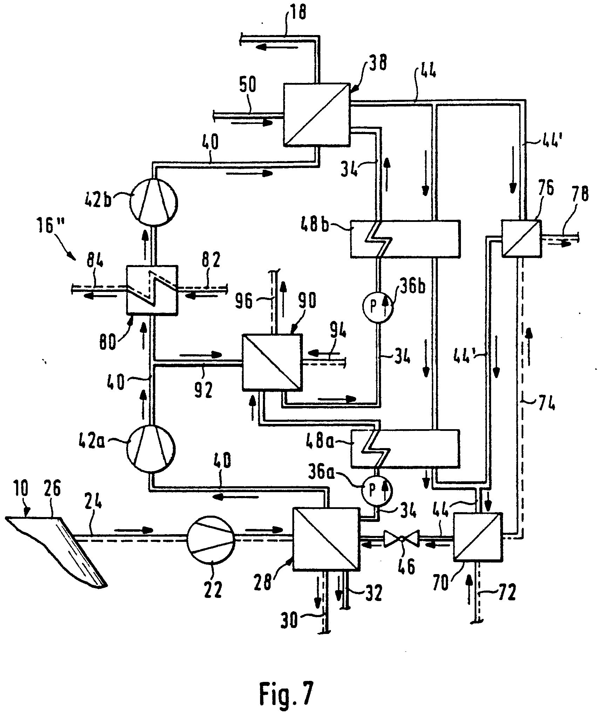

Die bei der Trocknung der Papierbahn 12 aus der der Trocknungszone zugeführten und in der im folgenden in Verbindung mit den Figuren 5 und 7 noch näher erläuterten Weise vorgewärmten Umgebungsluft durch Aufnahme der aus der Papierbahn ausgetriebenen Feuchtigkeit entstehende feuchte Abluft wird über eine mit einem Sauggebläse 22 versehene Leitung 24 aus den Trocknungsbereich an der Oberseite abschließenden Papermaschinenhaube 26 abgesaugt und in den Mantelraum des Entgasers 28 der Wärmepumpe 16 gefördert, in welchem mittels der in ihr enthaltenen Abwärme eine Komponente des Zweistoff-Arbeitsmittels, z.B. Ammoniak, gasförmig aus der als Wärmepumpen-Arbeitsmittel verwendeten, von einem Ammoniak-Wassergemisch gebildeten reichen Lösung ausgetrieben wird. Die dabei abgekühlte Abluft tritt über eine Leitung 30 aus dem Entgaser in die Umgebungsatmosphäre aus, während das bei der Abkühlung entstehende Kondensat über eine Kondensatleitung 32 abgeführt wird. Bei der—in den Figuren 1 und 2 nur vereinfacht in ihren Hauptkomponenten dargestellten—Zweistoff-Kompressions-Wärmepumpe 16 wird die durch das Austreiben von Ammoniak im niederdruckseitig vorgesehenen Entgaser 28 entstehende arme Lösung über eine Leitung 34 mit eingeschalteter Lösungspumpe 36 unter Druckerhöhung zum hochdruckseitig vorgesehenen Resorber 38 gefördert. Die im Entgaser 28 gasförmig ausgetriebene Komponente des Arbeitsmittels, d.h. das Ammoniak, wird andererseits mittels eines in eine den Entgaser mit dem Resorber verbindende Leitung eingeschalteten Kompressors 42 unter Druckerhöhung zum Resorber 38 geführt, und dort unter Abfuhr von Resorptionswärme nach außen in der Lösung wieder resorbiert. Die dann wieder reiche Lösung strömt anschließend über eine Leitung 44 zum Entgaser 28 zurück, wobei durch ein in die Leitung 44 eingeschaltetes Drosselorgan 46 der Druck in der reichen Lösung erniedrigt wird. Im Entgaser kann dann wieder Wärme aus der Abluft aufgenommen und Ammoniak gasförmig aus der reichen Lösung ausgetrieben werden. In die Leitungen 34 und 44 des Lösungskreislaufs ist dann zweckmäßig—der bei Zweistoff-Kompressions-Wärmepumpen übliche—Temperaturwechsler 48 eingeschaltet.

Die Resorptionswärme wird im Resorber 38 auf über eine Leitung 50 zugeführtes Speisewasser übertragen, welches dabei verdampft wird und dann mit einem Druck von 3 bar oder höher als Niederdruck-Prozeßdampf in die Prozeßdampf-Leitung 18 eingespeist wird. Die Temperatur des in die Zylinder 14 eintretenden Dampfs möge dann—entsprechend der Temperatur des Prozeßdampfs von konventionellen Papiermaschinen—140° bis 150°C betragen.

Der Mantelraum des Entgasers ist zusätzlich über eine Zweigleitung 52 mit der Prozeßdampf-Leitung 18 verbunden, wobei der Übertritt von Prozeßdampf in den Entgaser durch ein in die Zweigleitung eingeschaltetes und normalerweise geschlossenes Überströmventil 53 verhindert wird. Muß die Papiermaschine wegen Risses der Papierbahn 12 kurzzeitig stillgesetzt, d.h. die Dampfzufuhr zu den Zylindern 14 abgeschaltet werden, wird das Überströmventil 53 über eine die Druckerhöhung in der Prozeßdampf-Leitung 18 abtastende Steuereinrichtung 54 geöffnet und der im Resorber erzeugte Prozeßdampf somit durch den Entgaser geführt. Die Wärmepumpe kann also ständig weiterbetrieben werden, ohne daß eine zusätzliche Dampfquelle erforderlich wäre. Beim Wiederanfahren der Papiermaschine steht somit unmittelbar wieder Prozeßdampf für die Beheizung der Zylinder 14 zur Verfügung, indem einfach die Zufuhr der Prozeßdampf-Leitung 18 zu den Zylindern geöffnet und hierdurch das Überströmventil 53 geschlossen wird.

Beim erstmaligen Anfahren der Papiermaschine bzw. beim Anfahren nach längerem Maschinen-Stillstand mit abgeschalteter Wärmepumpe steht dagegen kein Prozeßdampf zur Verfügung. Für diesen Fall ist in Figur 2 eine Möglichkeit der Erzeugung von Prozeßdampf mittels der Wärmepumpe 16 veranschaulicht. Diese Möglichkeit besteht in der Beaufschlagung des Entgasers 28 durch in einem Zusatzbrenner 56 für Erdgas oder leichtes Heizöl vor Beginn des eigentlichen Anlaufs der Papiermaschine über ein Gebläse 58 aus der Umgebungsatmosphäre angesaugte erhitzte Luft, welche anstelle von feuchter Abluft in den Entgaser eingespeist wird. Sobald dann nach dem Wiederanlaufen der Papiermaschine wieder feuchte Abluft aus dem Trocknungsbereich zur Verfügung steht, kann der Brenner 56 abgeschaltet und die Anlage in der bereits geschilderten Weise betrieben werden.

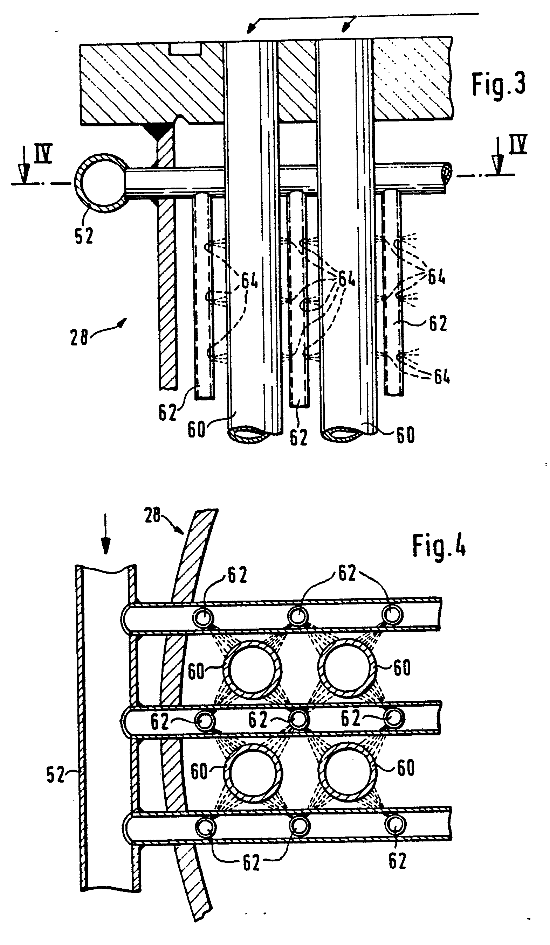

In den Figuren 3 und 4 ist eine Ausgestaltung des Entgasers 28 veranschaulicht, welche es ermöglicht, mittels des bei kurzzeitigem Stillstand der Papiermaschine in den Entgaser eingespeisten Prozeßdampfs nicht nur den Entgasungsprozeß der reichen Lösung fortzuführen, sondern gleichzeitig auch eventuell niedergeschlagene Verschmutzungsschichten auf den von der Außenseite einer Vielzahl von im Innern von der Lösung durchströmten Rohren 60 gebildeten wärmeübertragenden Flächen im Mantelraum des Entgasers zu entfernen. Zu diesem Zweck wird den Rohren 60 ein System von an die Zweigleitung 52 angeschlossenen Dampf-Blasrohren 62 eng benachbart zugeordnet, die in gleichmäßigen Abständen mit einer Vielzahl von Düsenbohrungen 64 versehen sind, aus denen der—bei Stillstand der Papiermaschine infolge Papierrisses-—zugeführte Dampf jeweils auf zugeordnete Bereiche der Rohre 60 aufgeblasen wird. Die Anzahl und Anordnung der Düsenbohrungen 64 ist dabei so gewählt, daß die gesamte Außenfläche der Rohre 60 durch die gerichtete Wasserdampf-Beaufschlagung freigeblasen und somit gereinigt wird.

In Figur 5 ist der Schaltplan einer gegenüber der in Verbindung mit der in Figur 1 gezeigten schematisierten Anlage verwendeten Wärmepumpe 16 in der erfindungsgemäßen Weise speziell in bezug auf die Trocknungsfunktion in mehrfacher Hinsicht verbesserten Zweistoff-Kompressions-Wärmepumpe 16' gezeigt. Im grundsätzlichen Aufbau stimmt die Wärmepumpe 16' mit der Wärmepumpe 16 überein, so daß es genügt, nachstehend nur die bei der Wärmepumpe 16' getroffenen, gegenüber der vereinfacht dargestellte Wärmepumpe 16 hinausgehenden tatsächlichen Weiterbildungen zu beschreiben, zumal für gleiche Teile beider Wärmepumpen in der Zeichnung auch jeweils gleiche Bezugszeichen verwendet sind.

Es ist zu erkennen, daß in den zwischen dem Drosselorgan 46 und dem Temperaturwechsler 48 liegenden Abschnitt der reiche Lösung führenden Leitung 44 ein Wärmetauscher 70 eingeschaltet ist, der andererseits mit über eine Leitung 72 aus der Umgebungsatmosphäre angesaugter Luft durchströmbar ist, welche die in der Leitung 44 strömende Lösung abkühlt und dann in eine Leitung 74 austritt.

Von dem zwischen dem Temperaturwechsler 48 und dem Resorber 38 liegenden Abschnitt der Leitung 44 ist außerdem eine Zweigleitung 44' abgezweigt, die hinter dem Temperaturwechsler 48 und vor dem Drosselorgan 46 in die Leitung 44 zurückgeführt ist. In der Zweigleitung 44' ist ein weiterer Wärmetauscher 76 eingeschaltet, der sekundärseitig an die Leitung 74 angeschlossen ist. Die im Wärmetauscher 70 bereits vorgewärmte Luft wird also im Wärmetauscher 76 erneut zur Abkühlung eines Teilstroms der reichen Lösung verwendet und tritt dann weiter erwärmt über eine Leitung 78 aus dem Wärmetauscher 76 aus. Die Leitung 78 ist dann in den als Kammer ausgebildeten Trocknungsbereich 10 verlängert zu denken. D.h. die zur Abkühlung der reichen Lösung in den Wärmetauschern 70 und 76 verwendete und dabei stufenweise vorgewärmte Umgebungsluft wird als Trocknungsluft verwendet. Dadurch verringert sich die über die mit Prozeßdampf beheizten Zylinder 14 zur Trocknung zuzuführende Energie entsprechend d.h. es kann mit Prozeßdampf niedrigerer Temperatur gearbeitet werden bzw.—falls die Temperatur des Prozeßdampfs nicht erniedrigt wird—steigt die Trocknungsleistung.

Über die vorstehend beschriebenen Maßnahmen hinaus ist bei der Wärmepumpe 16' der die gasförmige Arbeitsmittelkomponente unter Druckerhöhung vom Entgaser 28 zum Resorber 38 fördernde Kompressor 42 in zwei, den Druck stufenweise erhöhende Kompressoren 42a, 42b unterteilt. Zwischen den Kompressoren 42a und 42b ist in die die gasförmige Arbeitsmittelkomponente führende Leitung 40 ein Wärmetauscher 80 zur Zwischenkühlung der gasförmigen Arbeitsmittelkomponente mittels über eine Leitung 82 dem Wärmetauscher zu- und dann nach Vorwärmung über die Leitung 84 als Trocknungsluft in den Trocknungsbereich 10 weitergeförderte Umgebungsluft eingeschaltet.

In Figur 6 ist des weiteren eine Möglichkeit der Verringerung der zur Abkühlung der reichen Lösung in den Wärmetauschern 70 und 76 erforderlichen Luftmenge veranschaulicht, welche aus einer Einrichtung 86 zur Einspritzung von über eine Speiseleitung 88 zugeführtem Wasser in den luftdurchströmten Teil des Wärmetauschers 70 besteht. Diese Möglichkeit wird zweckmäßig dann eingesetzt, wenn die im Trocknungsabschnitt 10 der Papiermaschine erforderliche Trocknungs-Luftmenge nicht hinreicht, um die reiche Lösung in den Wärmetauschern 70, 76 im erwünschten Maße abzukühlen. Neben der durch die Wassereinspritzung verstärkten Abkühlung der reichen Lösung wird zusätzlich auch die Sättigungstemperatur in der Trocknungsluft und somit der aus dem Trocknungsbereich 10 dem Entgaser 28 zugeführten Abluft erhöht, wodurch sekundärseitig mit höherer Temperatur, d.h. höherem Druck, entgast werden kann. Die Kompressorleistung der Wärmepumpe wird damit entsprechend geringer.

In Figur 7 ist schließlich noch eine Zweistoff-Kompressions-Wärmepumpe 16' mit Lösungskreislauf schematisch dargestellt, bei welcher zusätzlich zu den in Verbindung mit der Wärmepumpe 16' beschriebenen Maßnahmen eine Resorption eines Teils der im Entgaser 28 ausgetriebenen gasförmigen Arbeitsmittelkomponente bei einem gegenüber dem im Resorber 38 herrschenden Druck erniedrigten Druck in der armen Lösung erfolgt. Zu diesem Zweck sind in die, die arme Lösung vom Entgaser 28 zum Resorber 38 führende Leitung 34 zwei Lösungspumpen 36a und 36b in Hintereinanderschaltung angeordnet, und in den zwischen diesen Lösungspumpen verlaufenden Abschnitt der Leitung 34 ist ein Wärmetauscher 90 eingeschaltet, dessen von der armen Lösung durchströmter Teil über eine Zweigleitung 92 mit der die gasförmige Arbeitsmittelkomponente führenden Leitung 40—und zwar in deren zwischen den Kompressoren 42a und 42b verlaufendem Teilabschnitt verbunden ist. D.h. aus der Leitung 40 kann auf einem Zwischendruck befindliche gasförmige Arbeitsmittelkomponenten zum lösungsdurchströmten Teil des Wärmetauschers 90 übertreten und wird dort entsprechend dem herrschenden mittleren Druck resorbiert. Die entstehende Resorptionswärme wird wiederum zur Vorwärmung von dem Wärmetauscher 90 über eine Leitung 94 zugeführte und anschließend über eine Leitung 96 in den Trocknungsbereich 10 der Papiermaschine als Trocknungsluft weiter geförderte Umgebungsluft verwendet.

Die stufenweise Druckerhöhung in der arme Lösung führenden Leitung 34 durch zwei Lösungspumpen 36a und 36b legt dann auch die Verwendung von zwei Temperaturwechslern 48a und 48b anstelle des bei den vorausgehenden Systemen vorgesehenen Temperaturwechslers 48 nahe.

Abschließend ist noch darauf hinzuweisen, daß in der Darstellung der in der erfindungsgemäßen Anlage verwendeten Zweistoff-Kompressions-Wärmepumpen 16, 16' und 16'' in der Zeichnung nur die für das Verständnis der Funktion wesentlichen grundlegenden Bauteile gezeigt sind, während Hilfsaggregate, wie Antriebsmotoren für die Kompressoren, das Abluft-Sauggebläse, Speisewasserpumpen oder auch Gebläse zur Förderung der in dem Wärmetauschern vorzuwärmenden Umgebungsluft ebenso wie die zum Betrieb der Anlage erforderlichen Meß-, Steuer- und Regelorgane der besseren Übersichtlichkeit halber weggelassen sind.

**Patentansprüche**

1. Anlage zur Rückgewinnung von in der Abluft der Trockner von Papiermaschinen enthaltener Abwärme mittels einer niederdruckseitig mit der Abluft beaufschlagten Kompressions-Wärmepumpe, mit welcher hochdruckseitig aus Speisewasser Prozeßdampf zur Beheizung der Trocknungszylinder erzeugt und außerdem anschließend zur Trocknung verwendete Luft vorgewärmt wird, dadurch gekennzeichnet, daß die Wärmepumpe als Zweistoff-Kompressions-Wärmepumpe (16; 16'; 16'') mit einem in die hochdruckseitigen Abschnitte der die reiche und die arme Lösung führenden Leitungen (44; 34) eingeschalteten Wärmewechsler (48) ausgebildet ist, daß die mit der Abluft-Abwärme zu beaufschlagende Seite des Entgasers (28) der Wärmepumpe (16; 16'; 16'') in die die feuchte Abluft vom Trockner abführende Leitung (24) eingeschaltet und der Wasserdampf-Auslaß des Resorbers (38) über eine Prozeßdampf-Leitung (18) mit dem Prozeßdampf-Einlaß des Trockners (10) der Papiermaschine verbunden ist, daß in den zwischen dem Wärmewechsler (48) und dem Drosselorgan (46) verlaufenden Abschnitt der die reiche Lösung vom Resorber (38) zum Entgaser (28) führenden Leitung (44) wenigstens ein Wärmetauscher (70) eingeschaltet ist, in welchem die reiche Lösung mittels der anschließend zur Trocknung verwendeten Luft abgekühlt wird, daß von dem zwischen dem Resorber (38) und dem Temperaturwechsler (48) liegenden Abschnitt der die reiche Lösung führenden Leitung (44) eine Zweigleitung (44') für reiche Lösung abgezweigt und in den zwischen dem Wärmewechsler (48) und dem Drosselorgan (46) verlaufenden Abschnitt der Leitung (44) zurückgeführt ist, und daß in die Zweigleitung (44') wenigstens ein weiterer Wärmetauscher (78) eingeschaltet ist, welcher bezüglich der Durchströmung mittels anschließend zur Trocknung verwendeter Umgebungsluft dem wenigstens einen Wärmetauscher (70) in Reihe nachgeschaltet ist.

2. Anlage nach Anspruch 1, dadurch gekennzeichnet, daß eine Einrichtung (86) zur Einspritzung von Wasser in den von der anschließend als Trocknungsluft verwendeten Umgebungsluft durchströmten Teil des wenigstens einem Wärmetauschers (70 bzw. 76) vorgesehen ist.

3. Anlage nach Anspruch 1 oder 2, dadurch gekennzeichnet, daß in die die im Entgaser (28) ausgetriebene gasförmige Arbeitsmittelkomponente zum Resorber (38) führende Leitung (40) entweder ein wenigstens zweistufiger Kompressor oder wenigstens zwei einstufige Kompressoren (42a; 42b) in Reihe hintereinander eingeschaltet ist bzw. sind, und daß hinter der ersten und vor der letzten Stufe des mehrstufigen Kompressors bzw. hinter dem ersten und vor dem letzten Kompressor (42a; 42b) in die die gasförmige Arbeitsmittelkomponente führende Leitung (40) wenigstens ein Wärmetauscher (80) eingeschaltet ist, der zur Abkühlung der gasförmigen Arbeitsmittelkomponente mit anschließend zur Trocknung verwendeter Umgebungsluft durchströmbar ausgebildet ist.

4. Anlage nach einem der Ansprüche 1 bis 3, dadurch gekennzeichnet, daß in der arme Lösung vom Entgaser (28) zum Resorber (38) führenden Leitung (34) zwei Lösungspumpen (36a; 36b) in Hintereinanderschaltung angeordnet sind, und in dem zwischen den Lösungspumpen (36a; 36b) liegenden Abschnitt der Leitung (34) ein andererseits mit anschließend zur Trocknung verwendeter Umgebungsluft als Kühlmittel durchströmter Wärmetauscher (90) eingeschaltet ist, in dessen von der armen Lösung durchströmten Teil zusätzlichen das eine Ende einer Zweigleitung (92) mündet, deren anderes Ende zwischen den Stufen des mehrstufigen Kompressors bzw. zwischen den Kompressoren (42a; 42b) an der gasförmige Arbeitsmittelkomponente führenden Leitung (40) angeschlossen it, wobei die gasförmige Arbeitsmittelkomponente in den von der armen Lösung durchströmten Teil des Wärmetauschers (90) übertritt und unter Abgabe von Resorptionswärme bei einem unter dem Druck des Resorbers (38) der Wärmepumpe (16'') liegenden Druck in der armen Lösung resorbiert wird.

5. Anlage nach einem der Ansprüche 1 bis 4, dadurch gekennzeichnet, daß an der Prozeßdampf-Leitung (18) eine zur abluftbeaufschlagten Seite des Entgasers (28) geführte Zweigleitung (52) angeschlossen ist, wobei Steuereinrichtungen (53, 54) zur Umschaltung des bei kurzzeitigem Stillstand der Papiermaschine in die Prozeßdampf-Leitung (18) eingespeisten Wasserdampfs in die Zweigleitung (52) vorgesehen sind.

6. Anlage nach Anspruch 5, dadurch gekennzeichnet, daß die Steuereinrichtungen ein in der Zweigleitung (52) eingeschaltetes und durch den beim Schließen der Dampfzufuhr zur Papiermaschine in der Prozeßdampf-Leitung (18) steigenden Dampfdruck geschaltetes Überströmventil (53) aufweisen.

7. Anlage nach Anspruch 5 oder 6, dadurch gekennzeichnet, daß innerhalb des Mantelraums des Entgasers (28) den mit der Abwärme bzw. dem Wasserdampf zu beaufschlagenden Flächen (Rohre 60) eine Vielzahl von im wesentlichen gleichmäßig verteilten, an die Zweigleitung angeschlossenen Dampfaustrittsdüsen (64) in geringem Abstand gegenübergestellt ist.

8. Anlage nach einem der Ansprüche 1 bis 7, dadurch gekennzeichnet, daß für das Neu- oder Wiederanfahren der Papiermaschine nach längerem Stillstand mit abgeschalteter Wärmepumpe (16) ein mit Erdgas, leichtem Heizöl oder einem anderen fossilen Brennstoff beheizbares Erhitzeraggregat (Brenner 56) für anschließend dem Entgaser (28) zuzuführende Umgebungsatmosphäre vorgesehen ist, mit der beim Anfahren der Papiermaschine solange Zweistoff-Arbeitsmittel entgast wird, bis aus der wieder in Betrieb genommenen Papiermaschine Abwärme zur Verfügung steht.

**Revendications**

1. Installation de récupération de la chaleur d'échappement contenue dans l'air d'échappement des séchoirs de machines à papier, au moyen d'une pompe à chaleur à compression alimentée côté basse pression par l'air d'échappement, à l'aide de laquelle est produit, côté haute pression, de la vapeur opérante, en partant d'eau de qualité alimentaire, en vue du chauffage des cylindres chauffants, et l'air utilisé pour le séchage étant en outre préchauffé ensuite, caractérisé en ce que la pompe à chaleur est une pompe à chaleur à compression binaire (16; 16'; 16'') comportant un échangeur de chaleur (48) placé dans les sections haute pression des conduites (44; 34) véhiculant la solution riche et la solution pauvre, que le côté du dégazeur (28) de la pompe à chaleur (16; 16'; 16'') alimenté par la chaleur d'échappement de l'air d'échappement est intercalé sur la conduite (24) évacuant l'air d'échappement humide du séchoir, et que l'évacuation de la vapeur d'eau de l'absorbeur (38) est relié à l'entrée de vapeur opérante du séchoir (10) de la machine à papier par l'intermédiaire d'une conduite de vapeur opérante (18), que, dans la section de la conduite (44), véhiculant la solution riche de l'absorbeur (38) du dégazeur (28), et située entre l'échangeur de chaleur (48) et l'organe d'étranglement (46), est mis en circuit au moins un échangeur de chaleur (70) dans lequel la solution riche est refroidie au moyen de l'air utilisé ensuite pour le séchage, que, de la section de la conduite (44) véhiculant la solution riche, placée entre l'absorbeur (38) et l'échangeur de température (48), est dérivée une conduite de dérivation (44') pour la solution riche, qui est ramenée dans la section de la conduite (44) s'étendant entre l'échangeur de chaleur (48) et l'organe d'étranglement (46), et que, dans la conduite de dérivation (44') est mis en circuit au moins un échangeur (76) supplémentaire, qui est placé en série et en aval du au moins un échangeur de chaleur (70), par rapport à l'écoulement traversant de l'air ambiant utilisé ensuite pour le séchage.

2. Installation selon la revendication 1, caractérisée en ce qu'il est prévu un moyen (86) d'injection d'eau dans la partie du au moins un échangeur de chaleur (70 ou 76) qui est parcourue par l'air ambiant utilisé ensuite comme air de séchage.

3. Installation selon la revendication 1 ou 2, caractérisée en ce que, dans la conduite amenant à l'absorbeur (38) le composant gazeux du fluide de travail expulsé dans le dégazeur (28), est mis en circuit soit un compresseur présentant au moins deux étages soit au moins deux compresseurs à un étage (42a; 42b) en série l'un derrière l'autre, et que derrière le premier et devant le dernier étage du compresseur à plusieurs étages, ou derrière le premier et devant le dernier compresseur (42a; 42b) est mis en circuit, dans la conduite (40) véhiculant le composant du fluide de travail sous forme gazeuse, au moins un échangeur de chaleur (80) qui est agencé pour être irrigué, en vue du refroidissement du composant gazeux du fluide de travail, par de l'air ambiant utilisé ensuite pour le séchage.

4. Installation selon l'une des revendications 1 à 3, caractérisée en ce que, dans la conduite (34) véhiculant la solution pauvre du dégazeur (28) à l'absorbeur (38), sont est mises en circuit, l'une derrière l'autre, deux pompes à solution (36a; 36b), et que, dans la section de la conduite (34) située entre les pompes à solution (36a; 36b), est mis en circuit un échangeur de chaleur (90), irrigué d'autre part par un fluide de refroidissement constitué par l'air ambiant utilisé ensuite pour le séchage, dans la partie irriguée par la solution pauvre duquel débouche en plus une extrémité d'une conduite de dérivation (92), dont l'autre extrémité est raccordée à la conduite (40) véhiculant le composant gazeux du fluide de travail entre les étages du compresseur à plusieurs étages ou entre les compresseurs (42a; 42b), le composant gazeux du fluide de travail étant entraîné dans la partie de l'échangeur de chaleur (90) qui est irriguée par la solution pauvre et étant absorbé dans la solution pauvre, en dégageant de la chaleur d'absorption, sous une pression inférieure à la pression de l'absorbeur (38) de la pompe à chaleur (16'').

5. Installation selon l'une des revendications 1 à 4, caractérisée en ce qu'une conduite de dérivation (52) amenée au côté du dégazeur (28) qui est alimenté par l'air d'échappement, est raccordée à la conduite de vapeur opérante (18), des moyens de commande (43, 54) étant prévus, dans la conduite de dérivation (42), pour la commutation du raccordement de la vapeur d'eau, injectée dans la conduite de vapeur opérante lors d'un bref arrêt de la machine à papier.

6. Installation selon la revendication 5, caractérisée en ce que les moyens de commande comportent une soupape de décharge (53) mise en circuit dans la conduite de dérivation (52) et connectée au moyen de la pression de vapeur augmentant, dans la conduite d'amenée de vapeur opérante (18), lors de la fermeture de l'amenée de vapeur à la machine à papier.

7. Installation selon la revendication 5 ou 6, caractérisée en ce que plusieurs buses de sortie de vapeur (64) réparties sensiblement régulièrement et raccordées à la conduite de dérivation sont placées en face, à faible distance, des surfaces (tubes 60) devant être alimentées par la chaleur d'échappement ou par la vapeur d'eau, à l'intérieur de l'enceinte d'enveloppe du dégazeur (28).

8. Installation selon l'une des revendications 1 à 7, caractérisée en ce que, pour un premier démarrage ou d'un redémarrage de la machine à papier, à la suite d'un arrêt de longue durée, avec mise hors service de la pompe à chaleur (16), est prévu un groupe de chauffage (brûleur 56), fonctionnant au gaz naturel, au mazout ou avec un autre combustible fossile, pour l'atmosphère ambiante à amener ensuite au dégazeur (28), à l'aide duquel on procède au dégazage du fluide de travail binaire lors du démarrage de la machine à papier, jusqu'à ce que l'on dispose à nouveau de la chaleur d'échappement provenant de la machine à papier remise en marche.

## Claims

1. Apparatus for the recovery of waste heat contained in the exhaust air from the dryers of paper machines by means of a compression heat pump to which the exhaust air is fed on the low-pressure side, by which process steam is produced on the high-pressure side from feed water, for the heating of the drying cylinders, and also air which is then used for the drying is preheated, characterized in that the heat pump is constructed as a two-substance compression heat pump (16; 16'; 16'') with a heat exchanger (48) inserted into the high-pressure-side sections of the lines (44; 34) carrying the rich and the poor solution; that the side of the degasser (28) of the heat pump (16; 16'; 16'') that is to be fed with the exhaust air waste heat is inserted into the duct (24) carrying the moist exhaust air away from the dryer, and the steam outlet of the resorber (38) is connected by a process stream line (18) to the process steam inlet of the dryer (10) of the paper machine; that at least one heat exchanger (70) is inserted into the section of the line (44) carrying the rich solution from the resorber (38) to the degasser (28) that runs between the heat exchanger (48) and the throttling means (46), in which the rich solution is cooled by means of the air that is then used for the drying; that a branch line (44') for the rich solution is taken from the section of the line (44) carrying the rich solution that is situated between the resorber (38) and the heat exchanger (48) and is brought back into the section of the line (44) running between the heat exchanger (48) and the throttling means (46), and that at least one additional heat exchanger (76) is inserted into the branch line (44'), which [heat exchanger] is connected, as regards the flow of ambient air that is then used for the drying, in series to the at least one heat exchanger (70).

2. Apparatus according to claim 1, characterized in that a system (86) for the injection of water into the portion of the at least one heat exchanger (70 and 76, respectively) is provided in the part of the at least one heat exchanger through which ambient air that is then used as drying air flows.

3. Apparatus according to claim 1 or 2, characterized in that either one compressor of at least two stages or at least two single-stage compressors (42a, 42b) are inserted in tandem into the line (40) carrying gaseous working agent component to the resorber (38), and that at least one heat exchanger (80) is inserted into the line (40) carrying the gaseous working agent component [at a point] following the first and preceding the last stage of the multi-stage compressor or following the first and preceding the last compressor (42a; 42b), and is constructed so as to permit the passage through it of ambient air that is then used for the drying, for the purpose of cooling the gaseous working agent component.

4. Apparatus according to any of claims 1 to 3, characterized in that two solution pumps (36a; 36b) are disposed in tandem in the line (34) carrying poor solution from the degasser (28) to the resorber (38), and in the section of the line (34) between the solution pumps (36a; 36b) a heat exchanger (90) is inserted through which, on the other side, ambient air flows as coolant which is then used for the drying, in whose part through which the poor solution flows the one end of a branch line (92) additionally opens, whose other end is connected to the line (40) carrying the gaseous working agent component between the stages of the multi-stage compressor or between the compressors (42a; 42b), the gaseous working agent component overflowing into the part of the heat exchanger (90) through which the poor solution flows, and being resorbed at a pressure in the poor solution that is below the pressure of the resorber (38) of the heat pump (16'').

5. Apparatus according to any of claims 1 to 4, characterized in that a branch line (52) carried to the exhaust-air side of the degasser (28) is connected to the process steam line (18), control means (53, 54) being provided for switching the steam fed into the process steam line, in the event of a brief shut-down of the paper machine, into the branch line (52).

6. Apparatus according to claim 5, characterized in that the control means have an overflow valve (53) inserted into the branch line (52) and operated by the steam pressure rising when the steam feed to the paper machine in the process steam line (18) is shut off.

7. Apparatus according to claim 5 or 6, characterized in that, within the jacket space of the degasser (28), a plurality of steam discharging nozzles (64) substantially uniformly distributed, and connected to the branch line, are set opposite, and at a short distance from, the surfaces (tubes 60) to be fed with the waste heat or the steam, as the case may be.

8. Apparatus according to any of claims 1 to 7, characterized in that, for the starting up or restarting of the paper machine after a relatively long shut-down with the heat pump (16) shut off, a heating unit (burner 56) which can be heated with natural gas, light heating oil or other fossil fuel for [heating] ambient atmosphere then to be fed to the degasser (28) is provided, by which two-substance working agent is degassed when the paper machine is started, until waste heat is available from the restarted paper machine.

Fig.1

EP 0 266 367 B1

Fig.2

Fig.3

Fig.4

Fig. 5

Fig. 6

Fig. 7